# EUROPÄISCHE PATENTANMELDUNG

(11) **EP 0 566 854 A2**
(43) Veröffentlichungstag der Anmeldung: **27.10.1993**
(21) Anmeldenummer: 93103814.5
(22) Anmeldetag: 10.03.1993
(51) Int. Cl.: B60H 1/00, B60N 2/44, B60H 1/32

(54) **Klimaanordnung für Kraftfahrzeuge**

(30) Priorität: 20.03.1992 DE 4209188
(71) Anmelder: KKW Kulmbacher Klimageräte-Werk GmbH, D-95326 Kulmbach (DE)
(72) Erfinder: Rodecker, Artur, D-95326 Kulmbach (DE); Zaugg, Johannes, D-96472 Rödental (DE)
(74) Vertreter: Zenz, Joachim Klaus, Dipl.-Ing.

(57) **Zusammenfassung**

Die zur Kältemaschine (1a) gehörigen Komponenten und der Kältemittelkreislauf (10a) sind separat von dem zu beheizenden Raum (Fahrgastzelle eines Kraftfahrzeugs) angeordnet und hermetisch abgeschlossen. Ein geschlossener Sekundärkreislauf, der beispielsweise Wasser als gesundheitlich und chemisch unbedenkliches Fluid enthält, überträgt Wärme zwischen Kältemaschine und einem einzigen Wärmetauscher (3), der in einem der Klimatisierung der Fahrgastzelle dienenden Gebläseluftstrom (5) angeordnet ist. An den Sekundärkreislauf ist auch der Kühlerkreislauf des Fahrzeugs angebunden, um Abwärme des Antriebsmotors (23) und ggf. der Batterien eines Elektrofahrzeugs zur Klimatisierung des Raums nutzbar zu machen.

## Beschreibung

Die Erfindung bezieht sich auf eine Anordnung zur Klimatisierung von Räumen, insbesondere der Fahrgastzelle von Kraftfahrzeugen, mit einer Kältemaschine und Mitteln zum Beheizen eines in den zu klimatisierenden Raum eingeleiteten Gebläseluftstroms.

Bekannte Klimageräte dieser Art verfügen in der Regel über zwei parallele Gerätekreisläufe, von denen der eine die Kältemaschine enthält und zum Kühlen (Wärmeentzug) der Fahrgastzelle und der andere zum Beheizen (Wärmezufuhr) der Fahrgastzelle dient.

Beide Kreisläufe sind mit getrennten und unterschiedlich aufgebauten Wärme-Übergabevorrichtungen versehen, die in ggf. unterschiedlichen Kanälen dem Luftstrom des Gebläses ausgesetzt werden. Der Keizkreislauf ist dabei in der Regel an den Kühlerkreislauf angebunden und nutzt Abwärme von den gekühlten Antriebsaggregaten o.dgl. zur Gewinnung der für die Fahrgastzelle benötigten Wärme aus. Der Kondensator des Kühlkreislaufs ist dem Fahrzeugkühler zugeordnet, so daß über das Kühlergebläse Wärme abgeführt werden kann. Der Verdampfer liegt im Einflußbereich des Innenraumgebläses, um Wärme aus dem zu klimatisierenden Raum aufzunehmen. Diese bekannnte Klimaanordnung bedingt eine individuelle Anpassung beider parallelen Systemkreise an die jeweiligen Leistungs- und Einbaubedingungen. Das Einbauvolumen ist wegen der beiden unterschiedliche Wärmeübergabevorrichtung groß, und zwar insbesondere im Bereich der Fahrgastzelle. Es sind besondere Maßnahmen zu treffen, damit der durch die Fahrgastzelle geleitete Kältemittelkreislauf keine schädlichen Dämpfe oder Leckageströme freisetzen kann.

Der Erfindung liegt die Aufgabe zugrunde, eine besonders raumsparend und einfach installierbare Klimaanordnung zu schaffen, die sich als Klimagerät für Kraftfahrzeuge und insbesondere für kleine Elektrofahrzeuge eignet.

Gelöst wird diese Aufgabe erfindungsgemäß dadurch, daß die zur Kältemaschine gehörigen Komponenten separat von dem zu klimatisierenden Raum angeordnet und in einen hermetisch abgeschlossenen Kältemittelkreislauf eingebunden sind; daß ein geschlossener Sekundärkreislauf, der ein gesundheitlich und chemisch unbedenkliches Fluid enthält, zur Wärmeübertragung zwischen einer wärmeaufnehmenden Komponente der Kältemaschine und wenigstens einem im Gebläseluftstrom angeordneten Wärmetauscher vorgesehen ist; daß die wenigstens eine wärmeaufnehmende Komponente der Kältemaschine in einem ersten Zweig des Sekundärkreislaufs angeordnet ist; und daß Abwärme von systemeigenen Wärmequellen über einen zum ersten Zweig parallelgeschalteten zweiten Zweig des Sekundärkreislaufs abführbar ist.

Diese erfindungsgemäße Anordnung hat zahlreiche Vorteile: Alle zur Kältemaschine gehörigen Komponenten sind von der Fahrgastzelle unabhängig in einem kompakten Gerät unterzubringen. Der Verdampfer der Kältemaschine ist aus der Fahrgastzelle herausgenommen. Unter dem Sicherheitsaspekt hat diese strikte Trennung von Kältemittelkreislauf und Fahrgastraum den Vorteil, daß etwaige Undichtigkeiten oder Leckströme im Kältemittelkreislauf die Fahrgastzelle und den Fahrgast nicht berühren können. Dadurch ergeben sich wiederum große Freiheiten in der Auswahl des verwendeten Kältemittels. Das eigentliche Klimagerät mit der Kältemaschine kann an irgendeiner geeigneten Stelle im Fahrzeug eingebaut werden. Die Verbindung zwischen Kältemaschine und einem einzigen Wärmetauscher in der Fahrgastzelle kann ohne beachtlichen Aufwand den Einbaubedingungen angepaßt werden. Damit sind die Voraussetzungen dafür geschaffen, daß die erfindungsgemäße Anordnung bei gleicher Ausbildung des eigentlichen Klimageräts (der Kältemaschine) in unterschiedliche Fahrzeuge und zur Klimatisierung unterschiedlicher Räume eingesetzt werden kann. Dies begünstigt die preiswerte Großserienherstellung des Klimageräts.

In bevorzugter Ausführungsform findet eine nach dem Kompressionsprinzip arbeitende Kältemaschine Verwendung. Der Sekundärkreislauf ist dabei mit dem Verdampfer und/oder deren Kondensator verbunden. Das ggf. mit Frostschutz gemischte Wasser als Sekundärkreislauffluid wird in an sich bekannter Weise über den Antriebsmotor des Fahrzeugs und durch dessen Kühler gepumpt und nimmt Abwärme der vorhandenen Wärmequellen auf. Bei einem Elektrofahrzeug wird die Abwärme der als Antriebs-Energiequellen dienenden Batterien vorzugsweise ebenfalls durch den Sekundärkreislauf abgeführt und zur Klimatisierung genutzt.

Eine besonders kompakte Anordnung und einfache Bauform läßt sich gemäß einer bevorzugten Weiterbildung der Erfindung dadurch erreichen, daß in dem Gebläseluftstrom des zu klimatisierenden Raums ein einziger Wärmetauscher angeordnet ist, der sowohl im Kühlbetrieb als auch im Heizbetrieb in den Sekundärkreislauf eingebunden ist. Im Kühlbetrieb nimmt dieser Innenwärmetauscher Wärme aus dem Gebläseluftstrom auf und kühlt damit den zu klimatisierenden Raum; im Heizbetrieb gibt derselbe Wärmetauscher Wärme an den Gebläseluftstrom ab.

Eine besonders günstige Nutzung der Abwärme vorhandener Wärmequellen läßt sich bei einem bevorzugten Ausführungsbeispiel der Erfindung dadurch erreichen, daß Mittel, insbesondere ein als Umschalt- oder Mischventil betriebenes Dreiwegeventil, zur Abwärmesteuerung und -verteilung auf einen Kühler und/oder den Innenwärmetauscher vorgesehen sind.

Zur Erhöhung des Wärmekomforts, speziell bei Elektrofahrzeugen kann eine als elektrischer Durchlauferhitzer ausgebildete Zusatzheizung mit dem Sekundärkreislauf verbunden sein. Diese Zusatzheizung ist vor allem bei einem Wärmedefizit im Sekundärkreislauf einschaltbar. Der elektrische Durchlauferhitzer kann wenigstens einen rohrförmigen Heizmodul aufweisen, der aus einem Kunststoffrohr mit einbauten Blankheizdrähten besteht. Bei höherem Bedarf an zusätzlicher Heizleistung können auch mehrere rohrförmige Heizmodule vorzugsweise lösbar miteinander gekuppelt werden.

Zur Verbesserung der Dichtheit des Kältesystems sind die Verbindungsleitungen des Kältemittelkreislaufs vorzugsweise als verlötete Festverrohrungen vorgesehen.

Eine vielseitig einsetzbare Ausführungsform der Erfindung ist dadurch gekennzeichnet, daß die Kältemaschine Mittel zum Reversieren der Kältemittel-Strömungsrichtung durch diejenigen beiden Aggregate aufweist, welche Kondensator und Verdampfer bilden, und daß die beiden Kältemaschinenaggregate so ausgebildet und angeordnet sind, daß sie in Abhängigkeit von der Kältemittel-Strömungsrichtung alternativ als Kondensator oder Verdampfer betreibbar sind. Diese Ausführung hat den Vorteil, daß der Sekundärkreislauf nur mit einem der beiden Kältemittelaggregate unter Wärmeübertragung gekoppelt zu sein braucht und von diesem Aggregat im Heizbetrieb Wärme zum Beheizen des Innenraums übernimmt oder - im Kühlbetrieb - aus dem Innenraum aufgenommene Wärme an das als Kondensator wirkende Aggregat übergibt. Die Strömungsrichtung ist mit Hilfe eines Vierwegeventils einfach umsteuerbar. Bei dieser Ausführungsform ist jedem der beiden Kältemittelaggregate ein eigenes Expansionsventil und ein Bypass zugeordnet. Der Bypass ist in der einen Strömungsrichtung jeweils geschlossen, wenn das Expansionsventil wirksam und das zugehörige Aggregat als Kondensator betrieben wird.

Weitere vorteilhafte Einzelheiten und Ausgestaltungen der Erfindung sind in den Unteransprüchen gekennzeichnet. Im folgenden die Erfindung anhand von in der Zeichnung schematisch dargestellten Ausführungsbeispielen näher erläutert. In der Zeichnung zeigen:
Fig. 1 ein erstes Ausführungsbeispiel der Erfindung, das sich besonders für den Einbau als Klimaanlage für ein Elektrofahrzeug eignet; und
Fig. 2 ein abgewandeltes Ausführungsbeispiel, bei dem die Kältemaschine zwecks selektiver Heizung oder Kühlung eines Innenwärmetauschers reversierbar ist.

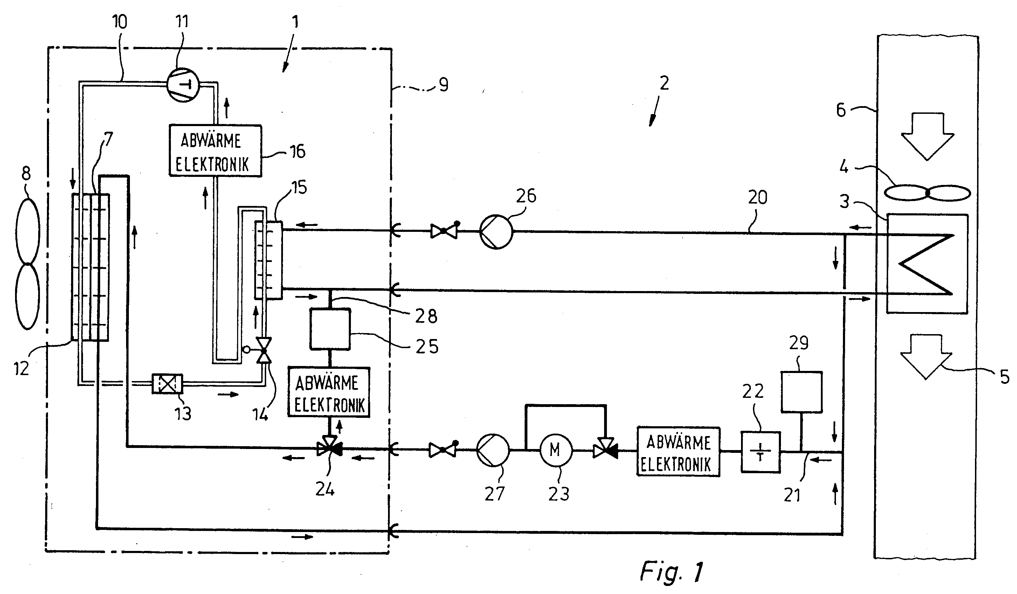

Die in Figur 1 schematisch dargestellte Klimaanlage weist eine Kompressorkältemaschine 1 auf, deren Kältemittelkreislauf bzw. Leitungssystem 10 durch verstärkte Linien dargestellt ist. Die Kältemaschine hat einen Verdichter 11, einen diesem nachgeschalteten Kondensator 12, einen Filtertrockner 12, ein Expansionsventil (Drossel) 14, einen Verdampfer 15 und eine der Steuerung dienende, hier als Abwärmeelektronik bezeichnete Meß- und und Steuerschaltung 16.

Die Klimaanordnung gemäß Figur 1 hat ferner einen mit vergleichsweise dünnen Linien dargestellten Sekundärkreislauf 2, in welchem ein gesundheitlich und chemisch unbedenkliches Fluid mit guten Wärmeübertragungseigenschaften, beispielsweise Wasser, gemischt mit einem Gefrierschutzmittel, umgewälzt wird. Der Sekundärkreislauf 2 hat einen ersten, der Klimatisierung dienenden Zweig 20, der einerseits mit dem Verdampfer 15 der Kältemaschine 1 und andererseits mit einem Innenwärmetauscher 3 verbunden ist. Der Wärmetauscher 3 ist so angeordnet, daß er vom Luftstrom 5 eines Gebläses 4 beaufschlagt wird. Dieser Gebläseluftstrom 5 wird durch ein hier nur schematisch als Kanal 6 dargestelltes Verteilungssystem in die zu klimatisierende Fahrgastzelle des Kraftfahrzeugs geleitet. Ein zweiter Zweig 21 des Sekundärkreislaufs dient zur Abwärmenutzung der vorhandenen Wärmequellen (das sind im dargestellten Ausführungsbeispiel die Batterieblöcke 22, der Antriebsmotor 23, einer ebenfalls als "Abwärmeelektronik" bezeichneten Elektroniksteuerung usw.) und steht im Normalbetrieb mit dem Kühler 7 des Fahrzeugs in Verbindung. Über ein Dreiwegeventil 24, das als Umschalt- oder Mischventil betrieben werden kann, kann das Sekundärkreislauf-fluid in Abhängigkeit von der Elektroniksteuerung über einen Durchlauferhitzer 25 in den ersten Zweig 20 und von dort zum Innenwärmetauscher 3 geleitet werden. Im ersten und im zweiten Zweig 20 und 21 sind geeignete Umwälzpumpen 26 und 27 angeordnet, die normalerweise zweipunktgeregelt sind. Ein Ventilator 8 verstärkt in bekannter Weise die Wärmeabführung vom Kondensator 12 bzw. dem mit diesem in wärmeübertragendem Kontakt stehenden Kühler 7. Die neben den Leitungen eingetragenen Pfeile veranschaulichen die Strömungsrichtungen sowohl des Primärkältemittels als auch des sekundären Fluids.

Im Kühlbetrieb wirkt die Kompressionskältemaschine 1 auf den Gebläseluftstrom 5 nicht direkt, sondern indirekt durch Wärmeentzug aus dem an den Innenwärmetauscher 3 angebundenen ersten Zweig 20 des Sekundärkreislaufs 2. Die über den Verdampfer 15 aus dem Sekundärkreislauf 2 aufgenommene Wärme wird entsprechend dem Arbeitsprinzip einer Kompressionskältemaschine am Kondensator 12 freigesetzt und über den Kühler 7 und den Ventilatorluftstrom 8 abgeführt.

Ist die Klimaanlage so eingestellt, daß der Fahrgastzelle über den Gebläseluftstrom 5 Wärme zugeführt werden soll, so ist die Kältemaschine 1 über die zugehörige Elektronik abgeschaltet. Die Abwärme vorhandener Wärmequellen (Batterie 22 und Antriebsmotor 23) wird über den zweiten Zweig 21 des Sekundärkreislaufs 2 aufgenommen und über das Dreiwegeventil 24 und den Verbindungszweig 28 zum ersten Zweig 20 und von dort zum Innenwärmetauscher 3 geleitet. Sollte die nutzbare Wärme der vorhandenen Wärmequellen (22, 23) zur Deckung des Wärmebedarfs in der Fahrgastzelle nicht ausreichen, so wird der Durchlauferhitzer 25 im Zweig 28 aktiviert. Der Durchlauferhitzer weist bei dem beschriebenen Ausführungsbeispiel wenigstens einen rohrförmigen Heizmodul auf, der aus einem Kunststoffrohr mit eingebauten Blankheizdrähten besteht.

Der Sekundärkreislauf ist ähnlich herkömmlichen Kühlkreisläufen geschlossen und, im vorliegenden Ausführungsbeispiel mit einem Ausgleichsbehälter 29 versehen. Das üblicherweise aus Wasser und einem Gefrierschutzmittel bestehende Sekundärkreislauf-Fluid ist gesundheitlich und chemisch unbedenklich. Soll-ten durch ungewöhnliche Beanspruchungen oder durch Alterungserscheinungen Undichtigkeiten an der Sekundärkreislaufschnittstelle zur Fahrgastzelle auftreten, so beeinträchtigen diese allenfalls die Funktion des Klimasystems und der Motorkühlung, nicht aber die Gesundheit und Sicherheit der Fahrgäste.

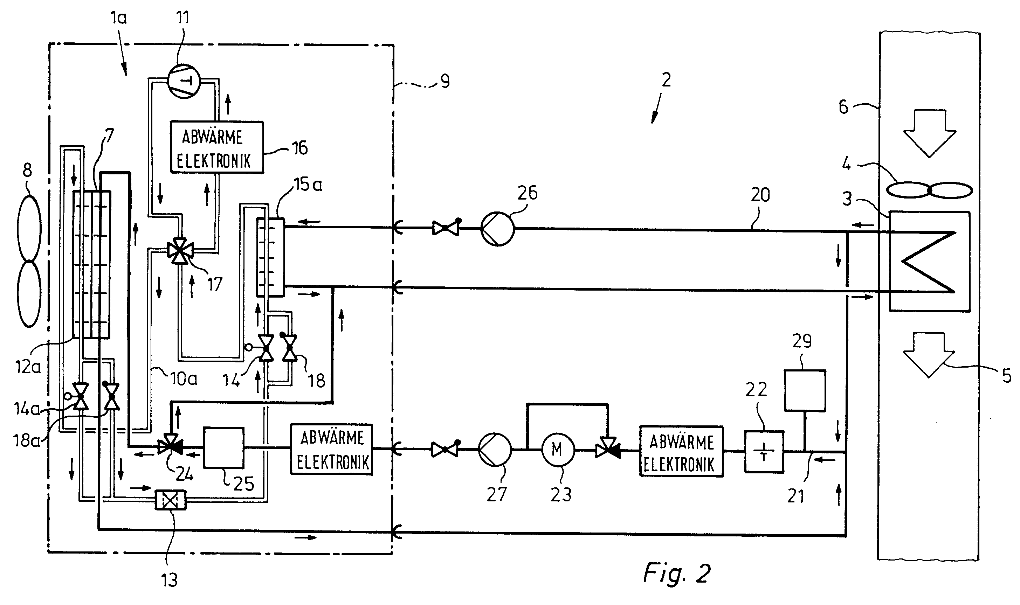

Die Ausführungsform gemäß Figur 2 hat alle zuvor anhand Figur 1 beschriebenen funktionswesentlichen Komponenten der erfindungsgemäßen Klimaanordnung; die übereinstimmenden Komponenten sind daher mit denselben Bezugszeichen bezeichnet.

In dem Ausführungsbeispiel gemäß Figur 2 ist die Kältemittel-Strömungsrichtung im Kältemittelkreislauf 10a selektiv reversierbar. Dies geschieht mit Hilfe eines Vierwege-Ventils, das Aus- und Eingänge des Verdichters 11 im Weg zwischen den beiden Kältemaschinenaggregaten 12a und 15a umpolen kann. In Figur 2 ist die Kältemittel-Strömungsrichtung entsprechend Figur 1 gezeigt, so daß die Kältemaschine Wärme über den Verdampfer 15a aus dem Sekundärkreislauf 2 aufnehmen kann (Kühlbetrieb). Dabei ist das Expansionsventil 14 wirksam und ein in einer Bypassleitung angeordneter Rückflußverhinderer 18 gesperrt. Bei Umschaltung des Vierwegeventils 17 strömt das Kältemittel in der den Pfeilen entgegengesetzten Richtung, d.h. das Kältemittel wird vom Verdichter 11 in Richtung des Kältemaschinenaggregats 15a komprimiert und in Richtung des Kältemaschinenaggregats 12a entspannt. In diesem Betriebszustand bildet das Aggregat 15a den Kondensator und das Aggregat 12a den Verdampfer. Über das Aggregat 15a gibt die Kältemaschine la Wärme in den Sekundärkreislauf 2 und beheizt den Innenwärmetauscher 3, dessen Wärme wiederum von dem Gebläseluftstrom 5 in die Fahrgastzelle übertragen wird. Auf diese Weise ist eine höchst komfortable Funktionsumschaltung ohne wesentliche Änderung der Form und Lage der Funktionskomponenten der Kältemaschine 1a und bei identischer Anordnung des Sekundärkreislaufs 2 möglich.

Der Durchlauferhitzer 25 ist nur noch als Notheizung angeordnet. Der vereiste Verdampfer kann mittels Abwärme aus dem Kühler 7 (Luftstrom des Ventilators 8) abgetaut werden. Reicht die natürliche Verlustwärme nicht aus, so kann der Durchlauferhitzer 25 auch zur Abtauung verwendet werden.

Die in der Zeichnung als Block 9 dargestellten Komponenten der Kältemaschine 1 bzw. 1a und des Sekundärkreislaufs 2 sowie der Kühler 7 können als eine Baueinheit ggf. in einem gemeinsamen Gehäuse vorgesehen sein. Diese Baueinheit 9 kann an einer geeigneten Stelle, insbesondere im Motorraum des Kraftfahrzeugs untergebracht werden. Aufgrund der Begrenzung des Kältemittelkreislaufs sind nur geringe Kältemittelmengen notwendig. Die Kältemaschine selbst kann auf vergleichsweise geringem Raum untergebracht werden.
Im Rahmen des Erfindungsgedankens sind zahlreiche Abwandlungen möglich. So kann der hier als Innenwärmetauscher 3 bezeichnete Wärmetauscher bei entsprechend angelegten Luftleitkanälen auch außerhalb des eigentlichen Innenraums angeordnet sein. Der Kühlkreislauf mit dem Kühler 7 braucht nicht unbedingt an den bei dem erfindungsgemäßen Klimasystem zur Wärmeübertragung verwendeten Sekundärkreislauf 2 angebunden zu sein. Die Abwärmenutzung der vorhandenen Wärmequellen kann in anderer Konfiguration vorgesehen sein. Schließlich läßt sich auch das Erfindungsprinzip mit Hilfe einer Adsorptionskältemaschine realisieren, wenn auch die Kompressionskältemaschine vor allem bei einer Klimaanlage für Fahrzeuge oder Elektrofahrzeuge bevorzugt ist.

## Patentansprüche

1. Anordnung zur Klimatisierung von Räumen, insbesondere der Fahrgastzelle von Kraftfahrzeugen, mit einer Kältemaschine (1; 1a) und Mitteln (2-4) zum Beheizen eines in den zu klimatisierenden Raum eingeleiteten Gebläseluftstroms (5),
**dadurch gekennzeichnet,**
daß die zur Kältemaschine gehörigen Komponenten (10-18) separat von dem zu klimatisierenden Raum angeordnet und in einen hermetisch abgeschlossenen Kältemittelkreislauf (10) eingebunden sind;
daß ein geschlossener Sekundärkreislauf (2), der ein gesundheitlich und chemisch unbedenkliches Fluid enthält, zur Wärmeübertragung zwischen einer wärmeaufnehmenden Komponente der Kältemaschine (1; 1a) und wenigstens einem im Gebläseluftstrom (5) angeordneten Wärmetauscher (3) vorgesehen ist;
daß die wenigstens eine wärmeaufnehmende Komponente (15; 15a) der Kältemaschine in einem ersten Zweig (20) des Sekundärkreislaufs (2) angeordnet ist; und
daß Abwärme von systemeigenen Wärmequellen (7, 22, 23, 25) über einen zum ersten Zweig (20) parallelgeschalteten zweiten Zweig (21) des Sekundärkreislaufs (2) abführbar ist.

2. Anordnung nach Anspruch 1, dadurch gekennzeichnet, daß die Kältemaschine als Kompressionskältemaschine (1, 1a) ausgebildet ist und der erste Zweig (20) mit dem Verdampfer (15; 15a) und der zweite Zweig (21) des Sekundärkreislaufes (2) mit dem Kondensator (12; 12a) in wärmetauschender Verbindung steht.

3. Anordnung nach Anspruch 2, dadurch gekennzeichnet, daß der Sekundärkreislauf (2) den Motor-Kühlkreislauf (21, 7) eines Kraftfahrzeugs enthält.

4. Anordnung nach Anspruch 3, dadurch gekennzeichnet, daß das Kraftfahrzeug ein Elektrofahrzeug ist und der Motor-Kühlkreislauf auch zur Abführung von Wärme von den Fahrzeugbatterien (22) vorgesehen ist.

5. Anordnung nach einem der Ansprüche 1 bis 4, dadurch gekennzeichnet, daß der im Gebläseluftstrom (5) angeordnete wenigstens eine Wärmetauscher (3) sowohl im Kühlbetrieb als auch im Heizbetrieb in den Sekundärkreislauf (2) eingebunden ist.

6. Anordnung nach einem der Ansprüche 1 bis 5, dadurch gekennzeichnet, daß Mittel (24) zur Abwärmesteuerung und -verteilung auf einen Kühler (7) und/oder den Innenwärmetauscher (3) vorgesehen sind.
